# EUROPEAN PATENT SPECIFICATION

(11) **EP 2 623 249 B1**
(45) Date of publication and mention of the grant of the patent: **29.03.2023**
(21) Application number: 11828592.3
(22) Date of filing: 25.07.2011
(51) Int. Cl.: B23K 26/04, B23K 26/00, B23K 26/08, H01S 3/00, B23P 19/10

(54) **LASER PROCESSING APPARATUS**
LASERVERARBEITUNGSVORRICHTUNG
APPAREIL DE TRAITEMENT AU LASER

(30) Priority: 30.09.2010 JP 2010223299
(43) Date of publication of application: 07.08.2013
(73) Proprietor: Panasonic Industrial Devices SUNX Co., Ltd., Aichi 486-0901 (JP)
(72) Inventor: MATSUMOTO, Akihisa, Kasugai-shi Aichi 486-0901 (JP); YAMAZAKI, Naoya, Kasugai-shi Aichi 486-0901 (JP); TAHARA, Akihiro, Kasugai-shi Aichi 486-0901 (JP)
(74) Representative: Westphal, Mussgnug & Partner Patentanwälte mbB
(86) International application number: PCT/JP2011/066841
(87) International publication number: WO 2012/043031

(56) References cited:
- JP-A- 1 164 919
- JP-A- 8 106 034
- JP-A- S63 295 089
- JP-A- 2004 219 244
- JP-A- 2004 351 516
- JP-A- 2009 058 792
- JP-U- H0 494 768
- US-A1- 2010 072 180

## Description

### TECHNICAL FIELD

The present invention relates to a laser processing apparatus for processing an object to be processed by radiating a laser beam thereon.

### BACKGROUND ART

A conventional laser processing apparatus is provided with an emission unit and a laser radiation unit connected with each other by a fiber-optic cable. For example, refer to Patent Document 1. The emission unit accommodates a laser oscillator that oscillates a laser beam. The laser radiation unit includes a radiation optical system such as a galvanomirror and a convergent lens. The radiation optical system radiates the laser beam emitted from the laser radiation unit to an object to be processed.

In such a laser processing apparatus, the laser emission unit and the laser radiation unit respectively have independent housings. Thereby, with respect to the laser emission unit and the fiber-optic cable, only the laser radiation unit may be easily exchanged in accordance with the size of the object to be processed, for example.

In such a laser processing apparatus, a misalignment of an optical axis of the laser beam greatly affects quality of processing of the object. Accordingly, when connecting the laser emission unit and the laser radiation unit with each other, it is necessary to determine positions thereof with high accuracy. Therefore, it is considered that the position determination of the laser emission unit and the laser radiation unit is performed by providing a position determining pin on the laser emission unit and a position determining hole in the laser radiation unit. The position determining pin is inserted and fits into the position determining hole.

### Prior Art Document

### Patent Document

Patent Document 1: Japanese Laid-Open Patent Publication No. 2004-351516 JP 2009 058792 A, which forms the basis for the preamble of claim 1, is mentioned as further prior art.

### SUMMARY OF THE INVENTION

### Problems that the Invention is to Solve

When such a structure is adopted, however, the position determining hole is groped before the position determining pin is inserted and fits into the position determining hole. Therefore, if the position determining pin is failed to be inserted into the position determining hole by the first attempt of the position determination, a part surrounding the position determining hole is rubbed by the position determining pin repeatedly. Accordingly, as the laser radiation unit is repeatedly attached to and removed from the laser emission unit, the position determining pin is scraped. As a result, a problem is caused that accuracy of the position determination of the laser emission unit and the laser radiation unit is reduced so that the accuracy of the position determination of the optical axis of the laser beam is reduced as well.

An object of the present invention is to provide a laser processing apparatus that can maintain the accuracy of the position determination of the optical axis of the laser beam even if the attachment and the detachment of the laser radiation unit with respect to the laser emission unit are repeated.

### Means for Solving the Problems

In order to achieve the above described object, a laser processing apparatus including a laser oscillation portion; a laser emission unit including an emission optical system that emits a laser beam oscillated by the laser oscillation portion; and a laser radiation unit that is detachably connected to the laser emission unit and has a radiation optical system for radiating the laser beam emitted from the laser emission unit to an object to be processed is provided. The laser processing apparatus further includes a first connection portion provided in a part of the laser emission unit that is connected to the laser radiation unit; a second connection portion provided in a part of the laser radiation unit that is connected to the laser emission unit; a projection provided on a lower end portion of one of the first connection portion and the second connection portion; and a recess provided on a lower end portion of the other one of the first connection portion and the second connection portion. The projection protrudes along an optical axis of the laser beam. The recess can fit the projection and slidably guide the projection along the optical axis. The recess is open in a direction facing at least the projection in an optical axis direction and downward in a direction intersecting the optical axis.

According to the above described configuration, when connecting the units with each other, the projection fits into the recess in the direction intersecting the optical axis. As the units are moved to approach each other along the optical axis, the units are guided by the fitting between the projection and the recess to approach each other. Accordingly, the first connection portion and the second connection portion are prevented from being worn out so that the first connection portion and the second connection portion are easily contacted and connected with each other with high accuracy in the state in which the positions thereof are determined. Therefore, even if operations of attachment and detachment of the laser radiation unit with respect to the laser emission unit are repeated, the positional accuracy of the optical axis of the laser beam is maintained.

It is preferable that the laser processing apparatus further includes a main unit that has the laser oscillation portion. The laser emission unit is connected to the main unit via a fiber-optic cable and emits the laser beam transmitted from the laser oscillation portion via the fiber-optic cable

The above described configuration contributes to size reduction of the laser emission unit.

It is preferable that the laser emission unit accommodates an end of the fiber-optic cable through which the laser beam is emitted, a diffusion lens that enlarges a beam diameter of the laser beam emitted from the fiber-optic cable, and a collimate lens that collimates the laser beam with the beam diameter enlarged by the diffusion lens into collimated beam.

According to the above described configuration, when the laser radiation unit is replaced with respect to the laser emission unit, it is not necessary to adjust the optical axis of the laser beam.

According to the invention, one of the emission optical system and the radiation optical system includes a protrusion that protrudes from a corresponding connection portion toward the other one of the emission optical system and the radiation optical system along the optical axis, the other one of the emission optical system and the radiation optical system includes an accommodation portion, which is dented from a corresponding connection portion in a protruding direction of the protrusion along the optical axis, and a protruding length of the projection is greater than a protruding length of the protrusion.

According to the above described configuration, when the laser radiation unit and the laser emission unit are connected with each other, the protrusion of the emission optical system enters the recess of the radiation optical system. Accordingly, the total length of the laser radiation unit and the laser emission unit in a connected state in the optical axis direction is reduced.

According to the above described configuration, the projection fits into the recess before the protrusion of the emission optical system reaches the accommodation portion of the radiation optical system. Accordingly, the protrusion of the emission optical system is prevented from colliding with the laser radiation unit.

It is preferable that the projection is located at a lower end portion of the laser radiation unit, and the recess is arranged in a lower end portion of the laser emission unit and is open downward from the laser emission unit.

According to the above described configuration, the recess can fit the projection from above. Accordingly, even if the laser radiation unit and the laser emission unit are heavy, the laser radiation unit and the laser emission unit can be easily connected with each other.

It is preferable that a lower surface of the projection is flat.

According to the above described configuration, by appropriately changing the length of the projection, the laser emission unit can be put on a mounting surface in a stable state.

It is preferable that the projection has a distal end portion. At least the distal end portion has a tapered portion in which a width of the tapered portion in a direction perpendicular to a direction of the optical axis of the laser beam decreases toward the distal end.

According to the above configuration, the projection can easily fit into the recess.

It is preferable that the laser processing apparatus further includes a connection state detection means provided on the second connection portion of the laser radiation unit. The connection state detection means detects a connection state of the second connection portion with the first connection portion of the laser emission unit.

According to the above described configuration, when abnormal circumstances are caused in the first connection portion and the second connection portion, abnormal circumstances can be immediately recognized.

It is preferable that the laser processing apparatus further includes a position determining means provided at a position on the first connection portion and the second connection portion other than the positions at which the projection and the recessed portion are provided. When the laser emission unit and the laser radiation unit are connected to each other, the position determining means determines the positions of the laser emission unit and the laser radiation unit in a direction perpendicular to the direction of the optical axis.

According to the above described configuration, the laser emission unit and the laser radiation unit can be connected with each other with higher accuracy by the position determining means.

### Effects of the Invention

According to the present invention, a laser processing apparatus that can maintain positional accuracy of an optical axis of a laser beam even if operations of attachment and detachment of a laser radiation unit with respect to a laser emission unit are repeated is provided.

### BRIEF DESCRIPTION OF THE DRAWINGS

Fig. 1 is a schematic diagram illustrating the entire structure of a laser processing apparatus according to one embodiment of the present invention;
Fig. 2 is a perspective view showing a laser emission unit of the laser processing apparatus of Fig. 1;
Fig. 3 is a perspective view showing a laser radiation unit of the laser processing apparatus of Fig. 1;
Fig. 4 is a schematic diagram showing the laser emission unit and the laser radiation unit, which are separated from each other; and
Fig. 5 is a partially enlarged perspective view showing a connection state between the laser emission unit and the laser radiation unit.

### MODES FOR CARRYING OUT THE INVENTION

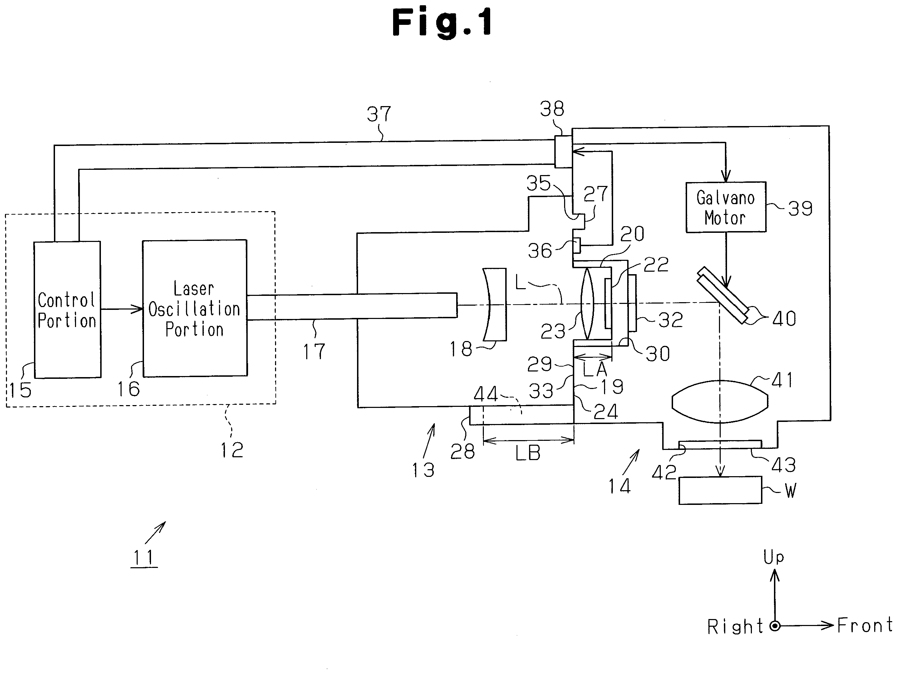

Hereinafter, a laser processing apparatus embodied in a laser marking apparatus according to an embodiment of the present invention will now be described with reference to the drawings. In the following description, "a front-back direction", "a left-right direction" and "a up-down direction" are defined as being directed to a front-back direction, a left-right direction and a up-down direction as shown by arrows in Fig. 1. In this case, the left-right direction corresponds to a direction orthogonal to the sheet of the drawing. The direction that extends toward the viewer from the sheet of the drawing is defined as the right direction.

As shown in Fig. 1, a laser marking apparatus 11 is provided with a main unit 12, a laser emission unit 13 and a laser radiation unit 14, each of which includes an independent casing. The main unit 12 accommodates a control portion 15 that controls the operation state of the whole apparatus and a laser oscillation portion, namely, a laser oscillator 16 that oscillates laser beam L. The control portion 15 is electrically connected to the laser oscillation portion 16 and controls driving of the laser oscillator 16.

The main unit 12 is connected from backside to the laser emission unit 13 via a fiber-optic cable 17. The laser radiation unit 14 is directly and detachably connected to the laser emission unit 13 from the front side, which is opposite to the main unit 12.

The fiber-optic cable 17 extends from the laser oscillator 16 toward the laser emission unit 13. A distal end of the fiber-optic cable 17 is inserted into a rear portion of the laser emission unit 13 straight toward the front. The laser beam L oscillated by the laser oscillator 16 is emitted straight forward from the distal end of the fiber-optic cable 17 into the laser emission unit 13. The laser emission unit 13 accommodates a diffusion lens 18 that diffuses the laser beam L emitted from the distal end of the fiber-optic cable 17 and a collimate lens 23 for collimating the laser beam L diffused by the diffusion lens 18 into collimated beam. That is, the diffusion lens 18 and the collimate lens 23 configure a beam expander.

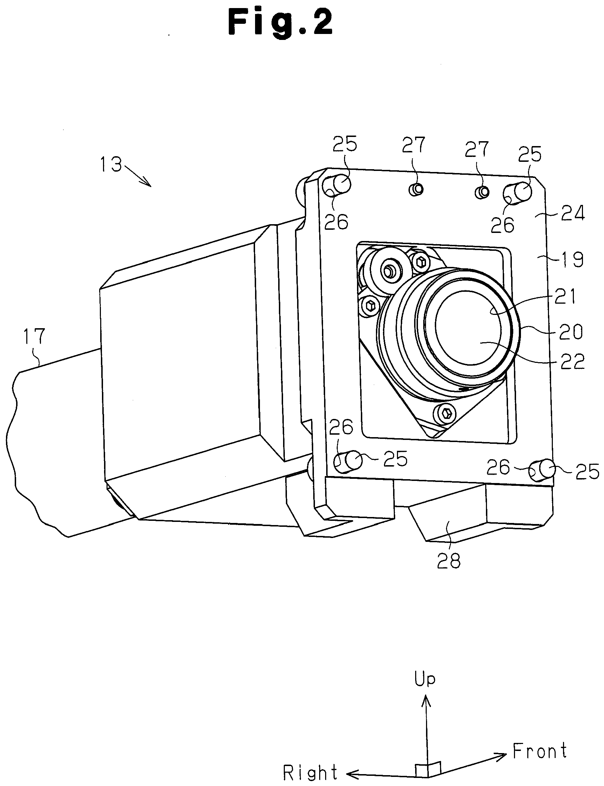

As shown in Figs. 1 and 2, a cylindrical protrusion 20 that protrudes forward, namely, toward the laser radiation unit 14 in the direction of the optical axis of the laser beam L, namely, in the front-back direction, is provided on a central portion of a first connection portion 19 to be connected with the laser radiation unit 14 in the laser emission unit 13. The distal end of the protrusion 20, namely, an opening 21 of the front end is closed by a disc-like protective glass 22. The rear end of the protrusion 20 is open to the inside of the laser emission unit 13. The collimate lens 23 is arranged in the protrusion 20.

In the present embodiment, the diffusion lens 18, the collimate lens 23, and the protective glass 22 configure an emission optical system that emits the laser beam L oscillated by the laser oscillator 16 to the laser radiation unit 14. Since the collimate lens 23 and the protective glass 22 are provided in the protrusion 20, a part of the emission optical system protrudes toward the laser radiation unit 14 along the optical axis of the laser beam L from the first connection portion 19.

A first contact surface 24 is a surface that contacts the laser radiation unit 14 in the first connection portion 19 of the laser emission unit 13 and defines a surface in parallel with a vertical surface. The first contact surface 24 is in a rectangular frame shape and surrounds the protrusion 20. A screw insertion hole 26 is formed in each of four corners of the first contact surface 24. A fixation screw 25 that fixes the laser emission unit 13 to the laser radiation unit 14 is inserted into the corresponding screw insertion hole 26. In an upper part of the first contact surface 24, a pair of position determining pins 27 on right and left sides is provided. The position determining pins 27 protrude straight forward between the screw insertion holes 26 on the right and left sides.

A recess 28 is formed in a lower end portion of the first connection portion 19 of the laser emission unit 13. The recess 28 is opened forward, backward and downward. The protrusion 20 has a protruding length LA with the first contact surface 24 as a reference. The recess 28 has a channel-shaped groove that extends in the front-back direction.

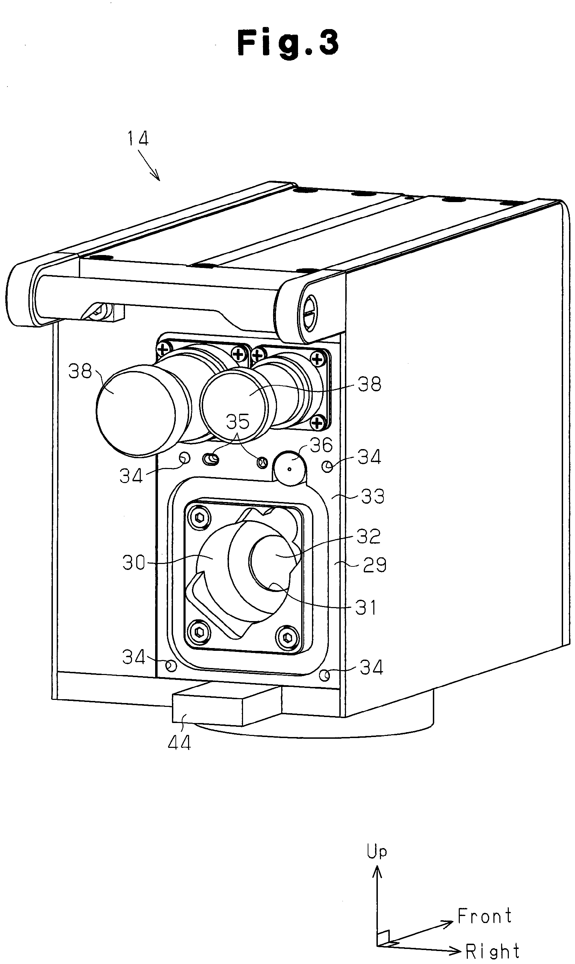

As shown in Figs. 1 and 3, the laser radiation unit 14 has a second connection portion 29 at a part connected to the laser emission unit 13. The second connection portion 29 has a cylindrical accommodation portion 30 at a position corresponding to the protrusion 20 of the laser emission unit 13. The accommodation portion 30 accommodates the protrusion 20. The accommodation portion 30 has at its front end an opening 31, which is closed by a disc-shaped protective glass 32. The rear end of the accommodation portion 30 is opened to receive the protrusion 20 of the laser emission unit 13. The protective glasses 22 and 32 face each other and are close to each other in the front-back direction.

As shown in Figs. 1 to 3, a contact surface on the second connection portion 29 of the laser radiation unit 14, which contact surface contacts the laser emission unit 13, includes a second contact surface 33 in parallel with the vertical surface. That is, the second contact surface 33 corresponds to the first contact surface 24. Screw holes 34 are formed at positions in the second contact surface 33 corresponding to the screw insertion holes 26. The fixation screws 25 can be threaded into the screw holes 34. Position determining holes 35 are formed at positions in the second contact surface 33 corresponding to the position determining pins 27. The position determining pins 27 can fit into the corresponding position determining holes 35.

In this case, since the left one of the position determining holes 35 is configured as an elongated hole that extends in the left-right direction, allowing slight movement of the fitted position determining pins 27 in the left-right direction. In the present embodiment, the position determining pins 27 and the position determining holes 35 configure a position determining means for determining the positions of the laser emission unit 13 and the laser radiation unit 14 in the direction perpendicular to the optical axis of the laser beam L.

A proximity sensor 36 as a connection state detecting means is provided in the second contact surface 33 at a position between the right one of the position determining holes 35 and the top right one of the screw holes 34. The proximity sensor 36 is exposed and arranged to be flush with the second contact surface 33. The proximity sensor 36 detects a connection state of the laser emission unit 13 with respect to the laser radiation unit 14. A connection terminal portion 38 is provided in an upper part of the second contact surface 33 of the laser radiation unit 14. An electric cable 37 that extends from the control portion 15 is detachably connected to the connection terminal portion 38.

The connection terminal portion 38 is electrically connected to the proximity sensor 36 and a galvano motor 39 arranged in the laser radiation unit 14. Accordingly, the control portion 15 is electrically connected to the proximity sensor 36 and the galvano motor 39 via the electric cable 37 and the connection terminal portion 38. When the control portion 15 determines that there are abnormalities in the connection state of the laser emission unit 13 with respect to the laser radiation unit 14 on the basis of the detection signal transmitted from the proximity sensor 36, the control portion 15 stops driving of the laser oscillator 16 and controls driving of the galvano motor 39.

A pair of galvanomirrors 40 is arranged in front of the protective glass 32 in the laser radiation unit 14. The galvanomirrors 40 reflect the laser beam L incident through the protective glass 32 into the laser radiation unit 14 downward. That is, the laser beam L is reflected by one of the galvanomirrors 40 and then further reflected by the other one of the galvanomirrors 40 downward. Each of the galvanomirrors 40 is rotated by the galvano motor 39. As the angle of each of the galvanomirrors 40 with respect to the laser beam L is changed by driving the galvano motor 39, the reflective direction of the laser beam L by each of the galvanomirrors 40 is changed.

An fθ lens (convergent lens) 41 is provided below the galvanomirrors 40. The fθ lens 41 converges the laser beam L reflected by the galvanomirrors 40 to a certain spot diameter on a surface of an object W to be processed to increase energy density until the energy density becomes appropriate for marking process. An opening 42 is formed at a position corresponding to the fθ lens 41 in a lower end portion in the laser radiation unit 14. The opening 42 is closed by a disc-shaped protective glass 43. Accordingly, by controlling the driving of the galvano motor 39 by the control portion 15, the angle of each of the galvanomirrors 40 with respect to the laser beam L is changed so that the laser beam L radiated onto the object W to be processed performs two-dimensional scanning along a surface of the object W to be processed. Thereby, characters or figures are marked, namely, printed on the surface of the object W to be processed.

In the present embodiment, the protective glass 32, the galvanomirrors 40, the fθ lens 41 and the protective glass 43 configure the radiation optical system, which radiates the laser beam L emitted from the laser emission unit 13 onto the object W to be processed. Since the protective glass 32 is located on the front end of the accommodation portion 30, a part of the radiation optical system is arranged to be recessed from the second connection portion 29 in the protruding direction (forward) of the protrusion 20 along the optical axis of the laser beam L.

A projection 44 is formed at a lower end portion of the second connection portion 29, namely, below the second contact surface 33 of the laser radiation unit 14. The projection 44 is arranged at a position corresponding to the recess 28 of the laser emission unit 13. The projection 44 is shaped as a cuboid that extends straight backward. The projection 44 can fit into the recess 28 from the front or from below and slide in the recess 28 in the front-back direction. A lower surface of the projection 44 is flat (flat surface). The projection 44 has a backward protruding length LB from the second contact surface 33 as a reference. The protruding length LB of the projection 44 is set greater than the protruding length LA of the protrusion 20. The length of the recess 28 in the front-back direction is set slightly greater than the protruding length LB of the projection 44.

Next, operation for connecting the laser emission unit 13 with the laser radiation unit 14 will be described.

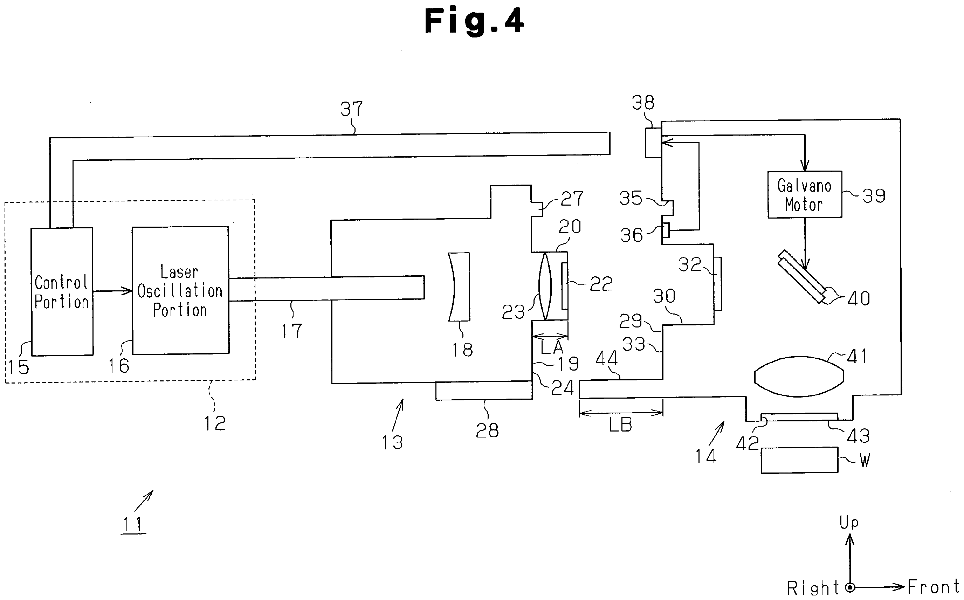

When connecting the laser emission unit 13 with the laser radiation unit 14, as shown in Fig. 4, the laser emission unit 13 and the laser radiation unit 14 are arranged so that the first connection portion 19 and the second connection portion 29 face each other in the front-back direction. Then, the rear end portion (distal end portion) of the projection 44 fits into the front end portion of the recess 28 such that the front end portion of the recess 28 is placed on the rear end portion of the projection 44 from above. Thereby, the second connection portion 29 of the laser radiation unit 14 faces the first connection portion 19 of the laser emission unit 13 with high accuracy.

At this moment, since the protruding length LB of the projection 44 is greater than the protruding length LA of protrusion 20, the protrusion 20 faces the accommodation portion 30 without hitting the second connection portion 29. Then, the laser emission unit 13 and the laser radiation unit 14 are moved to approach each other in the front-back direction. At this moment, the laser emission unit 13 and the laser radiation unit 14 move while maintaining fitting between the projection 44 and the recess 28.

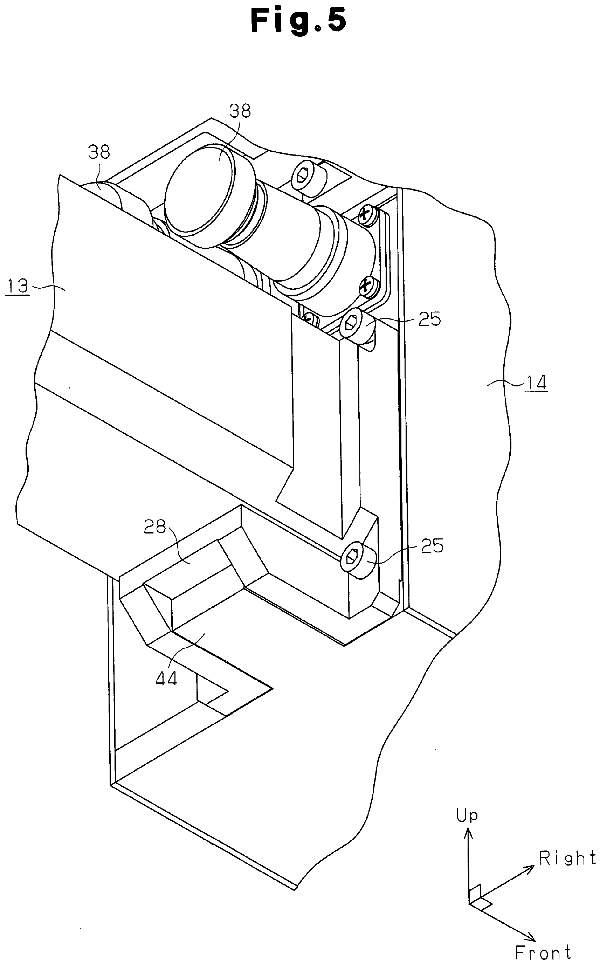

As the units 13 and 14 are moved until the units 13 and 14 contact each other, the contact surfaces 24 and 33 contact each other, and the whole projection 44 is accommodated in the recess 28 in the front-back direction (refer to Fig. 5). At this time, the projection 44 and the recess 28 function as a guide during movements of the units 13 and 14. Accordingly, the protrusion 20 is inserted into the accommodation portion 30 with high accuracy, and the position determining pins 27 fit into the corresponding position determining holes 35 with high accuracy. By fitting the position determining pins 27 into the corresponding position determining holes 35, the positions of the units 13 and 14 are determined in the direction perpendicular to the optical axis direction (front-back direction) of the laser beam L with high accuracy. Accordingly, the screw insertion holes 26 overlap with the corresponding screw holes 34 with high accuracy in the front-back direction.

Then, the fixation screws 25 are threaded into the corresponding screw holes 34 while being inserted in the corresponding screw insertion holes 26. Then, the units 13 and 14 are connected with each other in a fixed state by the fixation screws 25. Thereafter, the electric cable 37, which extends from the control portion 15, is connected to the connection terminal portion 38.

As described above, when connecting the units 13 and 14 with each other, the projection 44 fits into the recess 28, and then the first contact surface 24 contacts the second contact surface 33. Thereby, deviation caused by swing of the units 13 and 14 about an axis in the front-back direction is restricted. Accordingly, the position determining pins 27 easily fit into the corresponding position determining holes 35. That is, it is almost not necessary to slide the position determining pins 27 on the second contact surface 33 to grope the corresponding position determining holes 35 to fit the position determining pins 27 into the corresponding position determining holes 35. Accordingly, each of the position determining pins 27 is prevented from being unnecessarily rubbed with the second contact surface 33, so that the position determining pin 27 is prevented from being worn out. Therefore, even if operations of attachment and detachment of the laser radiation unit 14 with respect to the laser emission unit 13 are repeated, the positional accuracy upon connecting the units 13 and 14 is maintained. Accordingly, the positional accuracy of the optical axis of the laser beam L is maintained.

If each of the position determining pins 27 is worn out, play generated when fitting each of the position determining pins 27 into the corresponding position determining hole 35 becomes large. Accordingly, the positional accuracy when connecting the units 13 and 14 is likely to be reduced so that the positional accuracy of the optical axis of the laser beam L is reduced.

In the state in which the electric cable 37 is connected to the connection terminal portion 38, if abnormal circumstances such that the laser radiation unit 14 comes off the laser emission unit 13 are caused, the control portion 15 recognizes the abnormal circumstances on the basis of the detection signal from the proximity sensor 36 to stop the driving of the laser oscillator 16. Accordingly, the laser beam L is prevented from being radiated in unexpected directions outside the laser marking apparatus 11.

According to the above described embodiments, the following advantages are obtained:
(1) When connecting the units 13 and 14 with each other, the projection 44 fits into the recess 28 from below, and then the units 13 and 14 are moved to approach each other in the front-back direction. Thereby, the units 13 and 14 are guided by the fitting between the projection 44 and the recess 28 to approach each other. In this case, when fitting the projection 44 into the recess 28, the projection 44 is prevented from hitting a front surface (surface that faces with the laser radiation unit 14) of the recess 28. Accordingly, the front surface of the recess 28 is protected from being damaged or dented. Accordingly, the first connection portion 19 is prevented from being rubbed with the second connection portion 29 and the connection portions 19 and 29 are easily brought into contact and connected with each other with high accuracy in the state in which the positions thereof are determined. Therefore, even if the operations of attachment and detachment of the laser radiation unit 14 with respect to the laser emission unit 13 are repeated, the positional accuracy of the optical axis of the laser beam L is maintained.
(2) When the units 13 and 14 are connected with each other, the protrusion 20 enters the accommodation portion 30. Accordingly, the total sum of the lengths of the laser emission unit 13 and the laser radiation unit 14 in the connected state in the front-back direction (optical axis direction of the laser beam L) is reduced to contribute to size reduction of the laser marking apparatus 11.
(3) The protruding length LB of the projection 44 is greater than the protruding length LA of the protrusion 20. Accordingly, when the units 13 and 14 are connected with each other, the projection 44 fits into the recess 28 prior to insertion of the protrusion 20 into the accommodation portion 30. Therefore, the protrusion 20 is protected from hitting the second connection portion 29.
(4) The recess 28 is located at the lower end portion of the laser emission unit 13 and opened downward. The projection 44 is located at the lower end portion of the laser radiation unit 14. Accordingly, the recess 28 is fitted to the projection from above. Therefore, even if each of the units 13 and 14 is heavy, the units 13 and 14 are easily connected with each other.
(5) Since the lower surface of the projection 44 located at the lower end portion of the laser radiation unit 14 is flat, the laser radiation unit 14 is put on a mounting surface in a stable state.
(6) The position determining pins 27 are formed in the upper end portion of the first contact surface 24, and the corresponding position determining holes 35 are formed in the upper end portion of the second contact surface 33. The position determining pins 27 fit into the position determining holes 35. Accordingly, when the units 13 and 14 are connected with each other, the position of each of the units 13 and 14 in the direction perpendicular to the optical axis of the laser beam L is determined by fitting the position determining pins 27 into the corresponding position determining holes 35. Therefore, the units 13 and 14 are connected with each other with higher accuracy.
(7) In the state in which the electric cable 37 is connected to the connection terminal portion 38, if abnormal circumstances such that the laser radiation unit 14 comes off the laser emission unit 13 are caused, the control portion 15 recognizes the abnormal circumstances on the basis of the detection signal from the proximity sensor 36 to stop the driving of the laser oscillator 16. Accordingly, the laser beam L is prevented from being radiated in unexpected directions outside the laser marking apparatus 11.
(8) The laser emission unit 13 emits the laser beam L transmitted via the fiber-optic cable 17 from the laser oscillator 16 accommodated in the main unit 12. That is, since the laser oscillator 16 is not arranged in the laser emission unit 13, the configuration of the embodiment contributes to size reduction of the laser emission unit 13.
(9) The laser emission unit 13 accommodates the end portion of the fiber-optic cable 17 on the emission side of the laser beam L, the diffusion lens 18, which enlarges the beam diameter of the laser beam L emitted from the end portion of the fiber-optic cable 17, and the collimate lens 23, which collimates the laser beam L with the beam diameter enlarged by the diffusion lens 18 into the collimated beam. Accordingly, when the laser radiation unit 14 is replaced with respect to the laser emission unit 13, it is not necessary to adjust the optical axis of the laser beam L.

### (Modifications)

The embodiment shown above may be modified as follows.

The position determining pins 27 and the position determining holes 35 may be omitted.

The lower surface of the projection 44 does not necessarily have to be flat.

The recess 28 may be arranged at any one of the positions on opposite lateral surfaces and an upper end surface of the first connection portion 19 of the laser emission unit 13. In this case, the recess 28 is opened forward, backward and at a position outside the laser emission unit 13. Further, in this case, it is necessary to change the position of the projection 44 on the second connection portion 29 of the laser radiation unit 14 in accordance with the position of the recess 28.

It is not necessary to open the rear end of the recess 28.

The projection 44 may be formed on the laser emission unit 13, while the recess 28 may be formed in the laser radiation unit 14.

The position determining holes 35 may be formed in the laser emission unit 13, while the position determining pins 27 may be formed on the laser radiation unit 14.

The corners of the projection 44 may be chamfered.

The projection 44 may have, at least at the distal end portion, a tapered portion, the width of which in the left-right direction (direction perpendicular to the optical axis of the laser beam L) gradually decreases toward the distal end (rear end). Accordingly, the front end portion of the recess 28 is easily fitted to the distal end portion (rear end portion) of the projection 44, which includes at least the tapered portion, from above and from the front.

The protective glass 22, which closes the opening 21 of the protrusion 20, may be omitted. In this case, it is necessary to close the opening 21 of the protrusion 20 by the collimate lens 23.

The protective glass 43, which closes the opening 42 of the laser radiation unit 14, may be omitted. In this case, it is necessary to close the opening 42 by the fθ lens 41.

The laser oscillator 16 may be arranged in the laser emission unit 13.

The laser radiation unit 14 may be configured to radiate the laser beam L from above or from a lateral side according to the installation form of the laser radiation unit 14.

In the above described embodiment, the laser processing apparatus according to the present invention is embodied by the laser marking apparatus 11 that marks, namely, prints the characters and the figures on the surface of the object W to be processed. The embodiment is not limited to this, however. Other laser processing apparatuses may be embodied as long as they radiate the laser beam on the object to be processed, for example cut.

## Claims

1. A laser processing apparatus (11) comprising:
a laser oscillation portion (16);
a laser emission unit (13) including an emission optical system (18, 22, 23) that emits a laser beam (L) oscillated by the laser oscillation portion (16); and
a laser radiation unit (14) that is detachably connected to the laser emission unit (13) and has a radiation optical system (41, 43) for radiating the laser beam (L) emitted from the laser emission unit (13) to an object to be processed,
a first connection portion (19) provided in a part of the laser emission unit (13) that is connected to the laser radiation unit (14);
a second connection portion (29) provided in a part of the laser radiation unit (14) that is connected to the laser emission unit (13);
a projection (44) provided on a lower end portion of one of the first connection portion (19) and the second connection portion (29), the projection (44) protruding along an optical axis of the laser beam (L); and
a recess (28) provided on a lower end portion of the other one of the first connection portion (19) and the second connection portion (29), wherein
the recess (28), when connecting the laser emission unit (13) with the laser radiation unit (14), fits the projection (44) and slidably guides the projection (44) along the optical axis,
the recess (28) is open in a direction facing at least the projection (44) in an optical axis direction wherein
one of the emission optical system (18, 22, 23) and the radiation optical system (41, 43) includes a protrusion (20) that protrudes from a corresponding connection portion toward the other one of the emission optical system (18, 22, 23) and the radiation optical system (41, 43) along the optical axis,
the other one of the emission optical system (18, 22, 23) and the radiation optical system (41, 43) includes an accommodation portion (30), which is dented from a corresponding connection portion in a protruding direction of the protrusion (20) along the optical axis,
the laser processing apparatus (11) being **characterized in that**
the recess (28) is open downward in a direction intersecting the optical axis and
a protruding length (LB) of the projection (44) is greater than a protruding length (LA) of the protrusion (20).

2. The laser processing apparatus (11) according to claim 1, **characterized by** a main unit (12) that has the laser oscillation portion (16), wherein
the laser emission unit (13) is connected to the main unit (12) via a fiber-optic cable (17) and emits the laser beam (L) transmitted from the laser oscillation portion (16) via the fiber-optic cable (17).

3. The laser processing apparatus (11) according to claim 2, **characterized in that** the laser emission unit (13) accommodates an end of the fiber-optic cable (17) through which the laser beam (L) is emitted, a diffusion lens (18) that enlarges a beam diameter of the laser beam (L) emitted from the fiber-optic cable (17), and a collimate lens (23) that collimates the laser beam (L) with the beam diameter enlarged by the diffusion lens (18) into collimated beam.

4. The laser processing apparatus (11) according to any one of claims 1 to 3, **characterized in that**
the projection (44) is located at a lower end portion of the laser radiation unit (14), and
the recess (28) is arranged in a lower end portion of the laser emission unit (13) and is open downward from the laser emission unit (13).

5. The laser processing apparatus (11) according to claim 4, **characterized in that** a lower surface of the projection (44) is flat.

6. The laser processing apparatus according to any one of claims 1 to 5, **characterized in that** the projection (44) has a distal end portion, wherein at least the distal end portion has a tapered portion, and a width of the tapered portion in a direction perpendicular to a direction of the optical axis of the laser beam (L) decreases toward the distal end.

7. The laser processing apparatus according to any one of claims 1 to 6, **characterized by** a connection state detection means (36) provided on the second connection portion (29) of the laser radiation unit (14), wherein the connection state detection means (36) detects a connection state of the second connection portion (29) with the first connection portion (19) of the laser emission unit (13).

8. The laser processing apparatus according to any one of claims 1 to 7, **characterized by** a position determining means (27, 35) provided at a position on the first connection portion (19) and the second connection portion (29) other than the positions at which the projection (44) and the recess are provided, and wherein, when the laser emission unit (13) and the laser radiation unit (14) are connected to each other, the position determining means (27, 35) determines the positions of the laser emission unit (13) and the laser radiation unit (14) in a direction perpendicular to the direction of the optical axis.

## Patentansprüche

1. Laserverarbeitungsvorrichtung (11), die aufweist:
einen Laseroszillationsteil (16);
eine Laseremissionseinheit (13), die ein optisches Emissionssystem (18, 22, 23) enthält, das einen durch den Laseroszillationsteil (16) oszillierten Laserstrahl (L) emittiert; und
eine Laserstrahlungseinheit (14), die abnehmbar mit der Laseremissionseinheit (13) verbunden ist und ein optisches Strahlungssystem (41, 43) zum Abstrahlen des von der Laseremissionseinheit (13) emittierten Laserstrahls (L) auf ein zu bearbeitendes Objekt aufweist,
einen ersten Verbindungsteil (19), der in einem Teil der Laseremissionseinheit (13), der mit der Laserstrahlungseinheit (14) verbunden ist, vorgesehen ist;
einen zweiten Verbindungsteil (29), der in einem Teil der Laserstrahlungseinheit (14), der mit der Laseremissionseinheit (13) verbunden ist, vorgesehen ist;
einen Vorsprung (44), der an einem unteren Endteil von einem von dem ersten Verbindungsteil (19) und dem zweiten Verbindungsteil (29) vorgesehen ist, wobei der Vorsprung (44) entlang einer optischen Achse des Laserstrahls (L) vorsteht; und
eine Aussparung (28), die an einem unteren Endteil des anderen von dem ersten Verbindungsteil (19) und dem zweiten Verbindungsteil (29) vorgesehen ist, wobei
die Aussparung (28), wenn sie die Laseremissionseinheit (13) mit der Laserstrahlungseinheit (14) verbindet, mit dem Vorsprung (44) zusammenpasst und den Vorsprung (44) entlang der optischen Achse gleitend führt,
die Aussparung (28) in einer Richtung, die zumindest dem Vorsprung (44) in einer Richtung der optischen Achse gegenüberliegt, offen ist,
wobei
eines von dem optischen Emissionssystem (18, 22, 23) und dem optischen Strahlungssystem (41, 43) einen vorstehenden Teil (20) enthält, der von einem korrespondierenden Verbindungsteil in Richtung des anderen von dem optischen Emissionssystem (18, 22, 23) und dem optischen Strahlungssystem (41, 43) entlang der optischen Achse vorsteht,
das andere von dem optischen Emissionssystem (18, 22, 23) und dem optischen Strahlungssystem (41, 43) einen Aufnahmeteil (30) enthält, der von einem korrespondierenden Verbindungsteil in einer Vorsprungsrichtung des vorstehenden Teils (20) entlang der optischen Achse ausgebeult ist, wobei die Laserverarbeitungsvorrichtung (11) **dadurch gekennzeichnet ist, dass** die Aussparung (28) in einer die optische Achse schneidenden Richtung nach unten offen ist und
eine vorspringende Länge (LB) des Vorsprungs (44) größer als eine vorspringende Länge (LA) des vorstehenden Teils (20) ist.

2. Laserverarbeitungsvorrichtung (11) nach Anspruch 1, **gekennzeichnet durch** eine Haupteinheit (12), die den Laseroszillationsteil (16) aufweist, wobei
die Laseremissionseinheit (13) über ein fiberoptisches Kabel (17) mit der Haupteinheit (12) verbunden ist und den vom Laseroszillationsteil (16) gesendeten Laserstrahl (L) über das fiberoptische Kabel (17) emittiert.

3. Laserverarbeitungsvorrichtung (11) nach Anspruch 2, **dadurch gekennzeichnet, dass** die Laseremissionseinheit (13) ein Ende des faseroptischen Kabels (17), durch das der Laserstrahl (L) emittiert wird, eine Diffusionslinse (18), die einen Strahldurchmesser des von dem faseroptischen Kabel (17) emittierten Laserstrahls (L) vergrößert, und eine Kollimationslinse (23), die den Laserstrahl (L) mit dem durch die Diffusionslinse (18) vergrößerten Strahldurchmesser zu einem kollimierten Strahl kollimiert, aufnimmt.

4. Laserverarbeitungsvorrichtung (11) nach einem der Ansprüche 1 bis 3, **dadurch gekennzeichnet, dass**
sich der Vorsprung (44) an einem unteren Endteil der Laserstrahlungseinheit (14) befindet und
die Aussparung (28) in einem unteren Endteil der Laseremissionseinheit (13) angeordnet ist und von der Laseremissionseinheit (13) nach unten offen ist.

5. Laserverarbeitungsvorrichtung (11) nach Anspruch 4, **dadurch gekennzeichnet, dass** eine untere Oberfläche des Vorsprungs (44) flach ist.

6. Laserverarbeitungsvorrichtung nach einem der Ansprüche 1 bis 5, **dadurch gekennzeichnet, dass** der Vorsprung (44) einen distalen Endteil aufweist, wobei zumindest der distale Endteil einen verjüngten Teil aufweist und eine Breite des verjüngten Teils in einer Richtung senkrecht zu einer Richtung der optischen Achse des Laserstrahls (L) zu dem distalen Ende hin abnimmt.

7. Laserverarbeitungsvorrichtung nach einem der Ansprüche 1 bis 6, **gekennzeichnet durch** ein Verbindungszustandserkennungsmittel (36), das an dem zweiten Verbindungsteil (29) der Laserstrahlungseinheit (14) vorgesehen ist, wobei das Verbindungszustandserkennungsmittel (36) einen Verbindungszustand des zweiten Verbindungsteils (29) mit dem ersten Verbindungsteil (19) der Laseremissionseinheit (13) erkennt.

8. Laserverarbeitungsvorrichtung nach einem der Ansprüche 1 bis 7, **gekennzeichnet durch** ein Positionsbestimmungsmittel (27, 35), das an einer anderen Position auf dem ersten Teil (19) und dem zweiten Teil (29) vorgesehen ist als den Positionen, an denen der Vorsprung (44) und die Aussparung vorgesehen sind, und wobei das Positionsbestimmungsmittel (27, 35) die Positionen der Laseremissionseinheit (13) und der Laserstrahlungseinheit (14) in einer Richtung senkrecht zur Richtung der optischen Achse bestimmt, wenn die Laseremissionseinheit (13) und die Laserstrahlungseinheit (14) miteinander verbunden sind.

## Revendications

1. Appareil de traitement au laser (11) comprenant :
- une partie d'oscillation laser (16),
- une unité d'émission laser (13) avec un système optique d'émission (18, 22, 23) qui émet un faisceau laser (L) mis en oscillation par la partie d'oscillation laser (16), et
- une unité de rayonnement laser (14) reliée de manière détachable à l'unité d'émission laser (13) et ayant un système optique de rayonnement (41,43) pour rayonner le faisceau laser (L) émis par l'unité d'émission laser (13) vers un objet à traiter,
- une première partie de connexion (19) dans une partie de l'unité d'émission laser (13) reliée à l'unité de rayonnement laser (14),
- une seconde partie de connexion (29) en partie sur l'unité de rayonnement laser (14) qui est reliée à l'unité d'émission laser (13),
- une projection (44) sur la partie d'extrémité inférieure de l'un des éléments comprenant la première partie de connexion (19) et la seconde partie de connexion (29), la projection (44) étant en saillie selon l'axe optique du faisceau de laser (L), et
- une cavité (28) dans la partie d'extrémité inférieure de l'autre des éléments comprenant la première partie de connexion (19) et la seconde partie de connexion (29),
* la cavité (28) lorsque l'unité d'émission laser (13) est reliée à l'unité de rayonnement laser (14), reçoit la projection (44) et guide en coulissement la projection (44), selon l'axe optique,
* la cavité (28) est ouverte dans la direction tournée vers au moins la projection (44) dans la direction de l'axe optique,
appareil dans lequel
- l'un des éléments comprenant le système optique d'émission (18, 22, 23) et le système optique de rayonnement (41, 43) a un relief (20) venant en saillie d'une partie de connexion correspondante, en direction de l'autre des éléments comprenant le système optique d'émission (18, 22, 23) et le système optique de rayonnement (41, 43) selon l'axe optique,
- l'autre des éléments comprenant le système optique d'émission (18, 22, 23) et le système optique de rayonnement (41, 43) a une partie de réception (30) qui est formée à partir d'une partie de connexion correspondante dans une direction en saillie du relief (20), selon l'axe optique,
l'appareil de traitement au laser (11) étant **caractérisé en ce que** la cavité (28) est ouverte vers le bas dans une direction coupant l'axe optique, et
la longueur en relief (LB) de la projection (44) est supérieure à la longueur en saillie (LA) du relief (20).

2. Appareil de traitement au laser (11) selon la revendication 1, **caractérisé par**
une unité principale (12) comportant la partie d'oscillation laser (16),
- l'unité d'émission (13) étant reliée à l'unité principale (12) par un câble à fibre optique (17) et elle émet le faisceau laser (L) transmis par la partie d'oscillation laser (16) par le câble à fibre optique (17).

3. Appareil de traitement au laser (11) selon la revendication 2, **caractérisé en ce que**
l'émission d'unité laser (13) reçoit l'extrémité du câble à fibre optique (17) par lequel est émis le faisceau laser (L), une lentille de diffusion (18) qui augmente le diamètre du faisceau laser (L) émis par le câble à fibre optique (17) et une lentille de collimation (23) qui regroupe le faisceau laser (L) de diamètre de faisceau agrandi par la lentille diffusion (18) en un faisceau collimaté.

4. Appareil de traitement au laser (11) selon l'une des revendications 1 à 3,
**caractérisé en ce que**
la projection (44) est située à l'extrémité inférieure de l'unité de radiation laser (14) et la cavité (28) est dans la partie d'extrémité inférieure de l'unité d'émission laser (13) et elle est ouverte vers l'unité d'émission laser (13).

5. Appareil de traitement au laser (11) selon la revendication 4, **caractérisé en ce que**
la surface inférieure de la projection (44) est plate.

6. Appareil de traitement au laser selon l'une des revendications 1 à 5, **caractérisé en ce que**
la projection (44) a une partie d'extrémité distale, au moins cette partie d'extrémité distale a une partie conique dont la dimension diminue vers l'extrémité distale dans la direction perpendiculaire à la direction de l'axe optique du faisceau laser (L).

7. Appareil de traitement au laser selon l'une des revendications 1 à 6, **caractérisé par**
un moyen de détection de l'état connecté (36) prévu sur la seconde partie de connexion (29) de l'unité de radiation laser (14),
le moyen de détection de l'état connecté (36) détecte l'état connecté de la seconde partie de connexion (29) à la première partie de connexion (19) de l'unité d'émission laser (13).

8. Appareil de traitement au laser selon l'une des revendications 1 à 7, **caractérisé par**
un moyen de détermination de position (27, 35) prévu dans une position de la première partie de connexion (19) et de la seconde partie de connexion (29) autres que les positions auxquelles se trouvent la projection (44) et la cavité, et
lorsque l'unité d'émission laser (13) et l'unité de rayonnement laser (14) sont reliées l'une à l'autre, le moyen de détermination de position (27, 35) détermine les positions de l'unité d'émission laser (13) et celles de l'unité de rayonnement laser (14) dans une direction perpendiculaire à la direction de l'axe optique.
